# EUROPEAN PATENT SPECIFICATION

(11) **EP 3 467 260 B1**
(45) Date of publication and mention of the grant of the patent: **25.12.2024**
(21) Application number: 18199442.7
(22) Date of filing: 09.10.2018
(51) Int. Cl.: F01D 5/14, F04D 29/38

(54) **TURBINE BLADE WITH BOWED TIP**
TURBINENTLAUFSCHAUFEL MIT GEKRÜMMTER SCHAUFELSPITZE
AUBE MOBILE DE TURBINE AVEC POINTE COURBÉE

(30) Priority: 09.10.2017 US 201715727683
(43) Date of publication of application: 10.04.2019
(73) Proprietor: RTX Corporation, Farmington, CT 06032 (US)
(72) Inventor: NASH, Timothy Charles, Vernon, CT Connecticut 06066 (US)
(74) Representative: Dehns

(56) References cited:
- EP-A1- 3 045 660
- WO-A2-96/14494
- GB-A- 2 545 909
- JP-A- 2010 203 250
- US-A- 2 714 499
- US-A1- 2013 224 040

## Description

### BACKGROUND

This invention relates to a turbine blade. More particularly, this invention relates to a turbine blade airfoil having an improved design.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The shape of an airfoil designed for turbomachinery applications is an important characteristic. It is often a result of multidisciplinary considerations including aerodynamics, durability, structures and manufacturability. However, recent advances in the design of aerodynamically high-performing, high-pressure turbine blades, particularly at the tip, have caused increased difficulties in the design of blades.

WO 96/14494 A2 discloses a prior art turbine blade as set forth in the preamble of claim 1.

GB 2545909 A discloses a prior art fan disk and gas turbine engine.

US 2013/224040 A1 discloses a prior art high order shaped curve region for an airfoil.

EP 3045660 A1 discloses a prior art turbine airfoil and steam turbine.

US 2 714 499 A discloses prior art blading for turbomachines.

JP 2010 203250 A discloses a prior art gas turbine blade.

### SUMMARY

In one aspect, there is provided a turbine blade for a gas turbine engine as recited in claim 1.

In another aspect, there is provided a gas turbine engine as recited in claim 2.

A feature of an embodiment of the invention is set forth in the dependent claim.

### BRIEF DESCRIPTION OF THE DRAWINGS

Figure 1 is a schematic view of an example gas turbine engine according to a first non-limiting embodiment.
Figure 2 is a schematic view of a section of the gas turbine engine of Figure 1, such as a turbine section.
Figure 3 is a schematic view of a turbine blade.
Figure 4 is a cross-sectional view through an airfoil according to this invention.
Figure 5 is an aft perspective view of the airfoil according to this invention.
Figure 6 is a forward perspective view of the airfoil according to this invention.
Figure 7 is a suction side perspective view of the airfoil according to this invention.
Figure 8 is a pressure side perspective view of the airfoil according to this invention.

Features described in connection with one embodiment are applicable to all embodiments, unless such features are incompatible.

### DETAILED DESCRIPTION

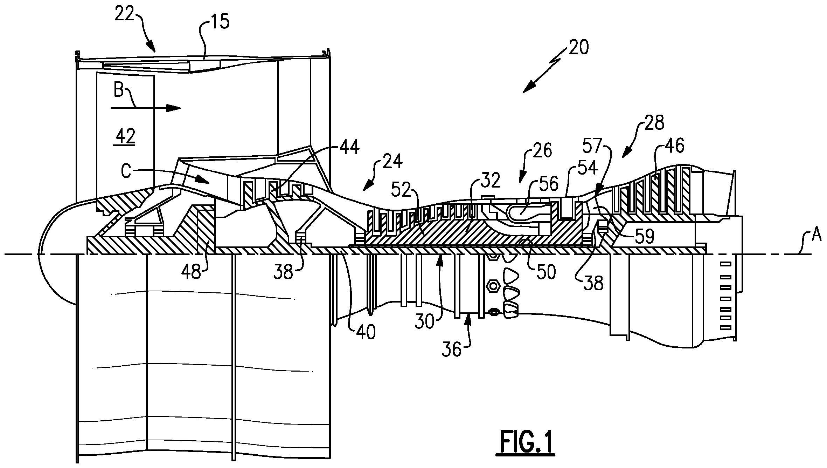

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

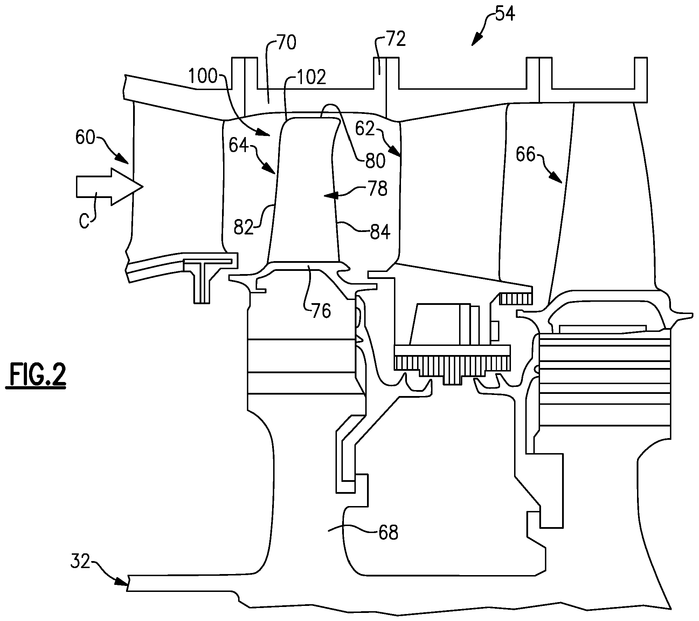

Referring to Figure 2, a cross-sectional view through a high pressure turbine section 54 is illustrated. In the example high pressure turbine section 54, first and second arrays of circumferentially spaced fixed vanes 60, 62 are axially spaced apart from one another. A first stage array of circumferentially spaced turbine blades 64, mounted to a rotor disk 68, is arranged axially between the first and second fixed vane arrays. A second stage array of circumferentially spaced turbine blades 66 is arranged aft of the second array of fixed vanes 62. It should be understood that any number of stages may be used.

The turbine blades each include a tip 80 adjacent to a blade outer air seal 70 of a case structure 72, which provides an outer flow path. The first and second stage arrays of turbine vanes and first and second stage arrays of turbine blades are arranged within a core flow path C and are operatively connected to a spool 32, for example.

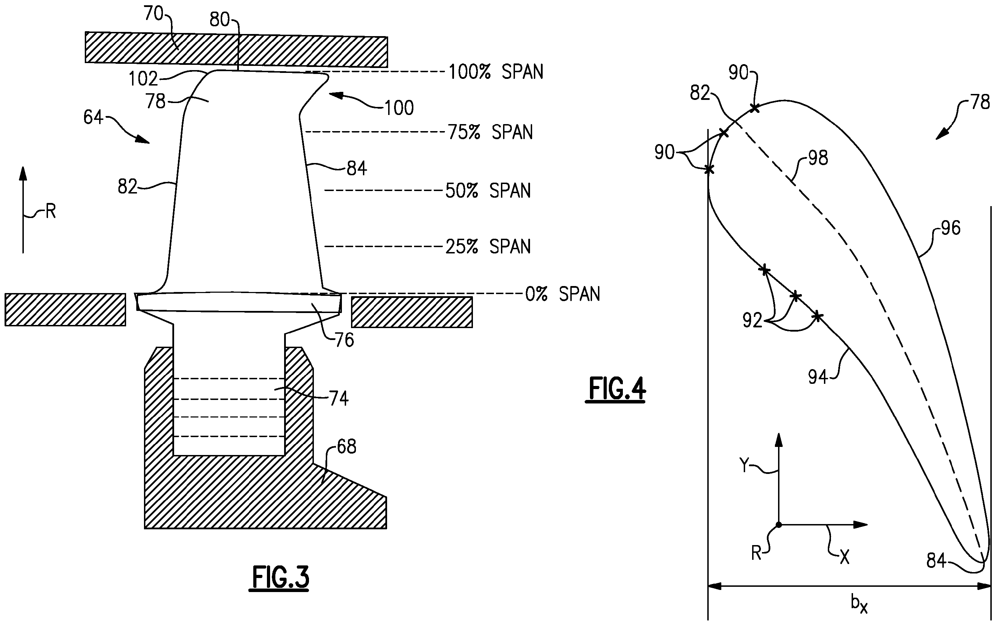

Each blade 64 includes an inner platform 76 respectively defining inner flow path. The inner platform 76 supports an airfoil 78 that extends in a radial direction R, as shown in Figure 3. It should be understood that the turbine vanes 60, 62 may be discrete from one another or arranged in integrated clusters. The airfoil 78 includes a leading edge 82 and a trailing edge 84.

The airfoil 78 is provided between pressure side 94 (predominantly concave) and suction side (predominantly convex) 96 in an airfoil thickness direction (Figure 4), which is generally perpendicular to a chord-wise direction provided between the leading and trailing edges 82, 84. Multiple turbine blades 64 are arranged in a circumferentially spaced apart manner in a circumferential direction Y (Figure 4). The airfoil 78 includes multiple film cooling holes 90, 92 respectively schematically illustrated on the leading edge 82 and the pressure side 94 (Figure 4).

The turbine blades 64 are constructed from a high strength, heat resistant material such as a nickel-based or cobalt-based superalloy, or of a high temperature, stress resistant ceramic or composite material. In cooled configurations, internal fluid passages and external cooling apertures provide for a combination of impingement and film cooling. Other cooling approaches may be used such as trip strips, pedestals or other convective cooling techniques. In addition, one or more thermal barrier coatings, abrasion-resistant coatings or other protective coatings may be applied to the turbine vanes 62.

Figures 3 and 4 schematically illustrate an airfoil including pressure and suction sides joined at leading and trailing edges 82, 84. An attachment or root 74 supports the platform 76. The root 74 may include a fir tree that is received in a correspondingly shaped slot in the rotor disk 68, as is known. The airfoil 78 extends a span from a support, such as an inner platform 76 to an end, such as a tip 80 in a radial direction R from a radially outer side of the platform 76. The 0% span and the 100% span positions, respectively, correspond to the radial airfoil positions at the support and the end. The leading and trailing edges 82, 84 are spaced apart from one another and an axial chord bₓ length (Figure 4) extends in the axial direction X.

As shown in Figure 3, a radially outer end of the airfoil 78 includes a bowed tip portion 100. The bowed tip portion 100 is bowed in a direction perpendicular to a mid-camber line 98 (Figure 4) of the airfoil 78 such that the bowed tip portion 100 extends towards the suction side 96 in a circumferential and towards the trailing edge 84 in an axial downstream direction. The geometry of the bowed tip portion 100 results in a non-pointed or rounded bowed tip leading edge 102 that reduces vulnerability of a leading edge of the bowed tip portion 100 to damaging vibrations and oxidation.

As shown in Figure 3, in one example, the bowed tip portion 100 begins at 80% of the span of the airfoil 78 and continues to the tip 80. In accordance with the claims, the bowed tip portion 100 begins between 75% and 85% of the bowed tip portion.

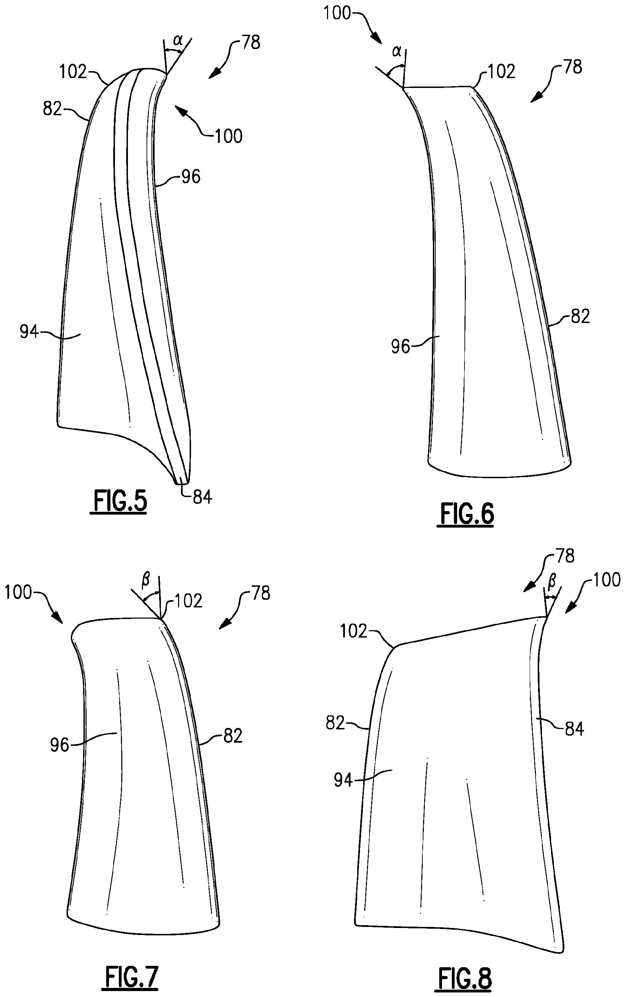

As shown in Figures 5 and 6, the bowed tip portion 100 bends in a circumferential direction towards the suction side 96 at an angle α to the radial direction. In accordance with the claims, the angle α is 2 degrees at the radially innermost part of the bowed tip portion 100 and 15 degrees at the tip 80. In accordance with the claims, the angle α is between 2 and 15 degrees. Similarly, as shown in Figures 7 and 8, the bowed tip portion 100 bends in an axially downstream direction towards at an angle β to the radial direction. In accordance with the claims, the angle β is between 3 and 19.6 degrees. Moreover, in accordance with the claims, the bowed tip portion 100 is bowed by the same degree in both the circumferential direction and the axially downstream direction. In accordance with the claims, the bowed tip portion 100 follows a curvilinear profile spanwise beginning at 3 degrees and increasing to 19.6 degrees at the tip 80. The angles α and β are measured at either of the leading and trailing edges of the bowed tip portion 100.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A turbine blade (64) for a gas turbine engine (20), the turbine blade (64) comprising:
a platform (76) having a radially inner side and a radially outer side;
a root portion (74) extending from the radially inner side of the platform (76); and
an airfoil (78) extending from the radially outer side of the platform (76), the airfoil (78) including:
a pressure side (94) extending between a leading edge (82) and a trailing edge (84);
a suction side (96) extending between the leading edge (82) and the trailing edge (84),
and a bowed tip portion (100) extending perpendicular to a mid-camber line (98) of the airfoil (78), such that the bowed tip portion (100) is bowed to extend towards the suction side (96) in a circumferential direction and towards the trailing edge (84) in an axial downstream direction,
**characterised in that**:
the bowed tip portion (100) begins at between 75% and 85% of a span of the airfoil (78);
said bowed tip portion (100) is bowed at a leading edge (102) of the bowed tip portion (100) or a trailing edge of the bowed tip portion (100) between 2 degrees at a radially innermost part of the bowed tip portion (100) and 15 degrees at a tip (80) of the airfoil (78) relative to a radial direction (R) perpendicular to the mid-camber line (98) in the circumferential direction (Y);
the bowed tip portion (100) is bowed at a leading edge (102) of the bowed tip portion (100) or a trailing edge of the bowed tip portion (100) at an angle (β) between 3 degrees at a radially innermost part of the bowed tip portion (100) and 19.6 degrees at a tip (80) of the airfoil (78) relative to the radial direction (R) perpendicular to the mid-camber line (98) in the axial direction (X);
the bowed tip portion (100) is bowed at a leading edge (102) of the bowed tip portion (100) or a trailing edge of the bowed tip portion (100) by the same degree relative to the radial direction (R) in both the circumferential direction (Y) and the axial direction (X); and
the bowed tip portion (100) follows a curvilinear profile at a leading edge (102) of the bowed tip portion (100) or a trailing edge of the bowed tip portion (100) beginning at 3 degrees and increasing to 19.6 degrees relative to a radial direction (R) at a tip (80) of the airfoil (78) in the axial direction (X).

2. A gas turbine engine (20) comprising:
a compressor section (24) and a turbine section (28); and
a circumferential array of turbine blades, as claimed in claim 1, located in the turbine section (28).

3. The gas turbine engine (20) of claim 2 or turbine blade (64) of claim 1, wherein the bowed tip portion (100) begins at 80% of the span of the airfoil (78).

## Patentansprüche

1. Turbinenlaufschaufel (64) für ein Gasturbinentriebwerk (20), wobei die Turbinenlaufschaufel (64) Folgendes umfasst:
eine Plattform (76), die eine radial innere Seite und eine radial äußeren Seite aufweist;
einen Fußabschnitt (74), der sich von der radial inneren Seite der Plattform (76) erstreckt;
und
ein Tragflächenprofil (78), das sich von der radial äußeren Seite der Plattform (76) erstreckt, wobei das Tragflächenprofil (78) Folgendes beinhaltet:
eine Druckseite (94), die sich zwischen einer Vorderkante (82) und einer Hinterkante (84) erstreckt;
eine Saugseite (96), die sich zwischen der Vorderkante (82) und der Hinterkante (84) erstreckt, und einen gekrümmten Schaufelspitzenabschnitt (100), der sich senkrecht zu einer Mittelwölbungslinie (98) des Tragflächenprofils (78) erstreckt, sodass der gekrümmte Schaufelspitzenabschnitt (100) derart gekrümmt ist, dass er sich in einer Umfangsrichtung in Richtung der Saugseite (96) und in einer axialen stromabwärtigen Richtung in Richtung der Hinterkante (84) erstreckt,
**dadurch gekennzeichnet, dass**:
der gekrümmte Schaufelspitzenabschnitt (100) bei zwischen 75 % und 85 % einer Spannweite des Tragflächenprofils (78) beginnt;
der gekrümmte Schaufelspitzenabschnitt (100) an einer Vorderkante (102) des gekrümmten Schaufelspitzenabschnitts (100) oder einer Hinterkante des gekrümmten Schaufelspitzenabschnitts (100) zwischen 2 Grad an einem radial innersten Teil des gekrümmten Schaufelspitzenabschnitts (100) und 15 Grad an einer Schaufelspitze (80) des Tragflächenprofils (78) relativ zu einer radialen Richtung (R) senkrecht zu der Mittelwölbungslinie (98) in der Umfangsrichtung (Y) gekrümmt ist;
der gekrümmte Schaufelspitzenabschnitt (100) an einer Vorderkante (102) des gekrümmten Schaufelspitzenabschnitts (100) oder einer Hinterkante des gekrümmten Schaufelspitzenabschnitts (100) mit einem Winkel (β) zwischen 3 Grad an einem radial innersten Teil des gekrümmten Schaufelspitzenabschnitts (100) und 19,6 Grad an einer Schaufelspitze (80) des Tragflächenprofils (78) relativ zu der radialen Richtung (R) senkrecht zu der Mittelwölbungslinie (98) in der axialen Richtung (X) gekrümmt ist;
der gekrümmte Schaufelspitzenabschnitt (100) an einer Vorderkante (102) des gekrümmten Schaufelspitzenabschnitts (100) oder einer Hinterkante des gekrümmten Schaufelspitzenabschnitts (100) um den gleichen Grad relativ zu der radialen Richtung (R) sowohl in der Umfangsrichtung (Y) als auch in der axialen Richtung (X) gekrümmt ist; und
der gekrümmte Schaufelspitzenabschnitt (100) einem krummlinigen Profil an einer Vorderkante (102) des gekrümmten Schaufelspitzenabschnitts (100) oder einer Hinterkante des gekrümmten Schaufelspitzenabschnitts (100) folgt, das bei 3 Grad beginnt und auf 19,6 Grad relativ zu einer radialen Richtung (R) an einer Schaufelspitze (80) des Tragflächenprofils (78) in der axialen Richtung (X) ansteigt.

2. Gasturbinentriebwerk (20), umfassend:
einen Verdichterabschnitt (24) und einen Turbinenabschnitt (28); und
eine in Umfangsrichtung verlaufende Anordnung von Turbinenlaufschaufeln nach Anspruch 1, die sich in dem Turbinenabschnitt (28) befindet.

3. Gasturbinentriebwerk (20) nach Anspruch 2 oder Turbinenlaufschaufel (64) nach Anspruch 1, wobei der gekrümmte Schaufelspitzenabschnitt (100) bei 80 % der Spannweite des Tragflächenprofils (78) beginnt.

## Revendications

1. Aube de turbine (64) pour un moteur à turbine à gaz (20), l'aube de turbine (64) comprenant :
une plate-forme (76) ayant un côté radialement intérieur et un côté radialement extérieur ;
une partie de racine (74) se prolongeant à partir du côté radialement intérieur de la plate-forme (76) ;
et
un profil aérodynamique (78) se prolongeant du côté radialement extérieur de la plate-forme (76), le profil aérodynamique (78) comportant :
un côté pression (94) se prolongeant entre un bord d'attaque (82) et un bord de fuite (84) ;
un côté aspiration (96) se prolongeant entre le bord d'attaque (82) et le bord de fuite (84), et une partie de pointe arquée (100) se prolongeant perpendiculairement à une ligne de cambre médiane (98) du profil aérodynamique (78), de telle sorte que la partie de pointe arquée (100) est arquée pour se prolonger vers le côté aspiration (96) dans une direction circonférentielle et vers le bord de fuite (84) dans une direction axiale en aval,
**caractérisé en ce que** :
la partie de pointe arquée (100) commence entre 75 % et 85 % d'une portée du profil aérodynamique (78) ;
ladite partie de pointe arquée (100) est arquée au niveau d'un bord d'attaque (102) de la partie de pointe arquée (100) ou au niveau d'un bord de fuite de la partie de pointe arquée (100) entre 2 degrés dans une partie radialement plus interne de la partie de pointe arquée (100) et 15 degrés au niveau de la pointe (80) du profil aérodynamique (78) par rapport à une direction radiale (R) perpendiculaire à la ligne de cambre médiane (98) dans la direction circonférentielle (Y) ;
la partie de pointe arquée (100) est arquée au niveau d'un bord d'attaque (102) de la partie de pointe arquée (100) ou au niveau d'un bord de fuite de la partie de pointe arquée (100) à un angle (β) entre 3 degrés dans une partie radialement plus interne de la partie de pointe arquée (100) et 19,6 degrés au niveau de la pointe (80) du profil aérodynamique (78) par rapport à la direction radiale (R) perpendiculaire à la ligne de cambre médiane (98) dans la direction axiale (X) ;
la partie de pointe arquée (100) est arquée au niveau d'un bord d'attaque (102) de la partie de pointe arquée (100) ou au niveau d'un bord de fuite de la partie de pointe arquée (100) à un même degré par rapport à la direction radiale (R) aussi bien dans la direction circonférentielle (Y) que dans la direction axiale (X) ; et
la partie de pointe arquée (100) suit un profil curviligne au niveau du bord d'attaque (102) de la partie de pointe arquée (100) ou un bord de fuite de la partie de pointe arquée (100) commençant à 3 degrés et augmentant à 19,6 degrés par rapport à une direction radiale (R) au niveau d'une pointe (80) du profil aérodynamique (78) dans la direction axiale (X).

2. Moteur à turbine à gaz (20), comprenant :
une section de compresseur (24) et une section de turbine (28) ; et
un ensemble circonférentiel d'aubes de turbine, selon la revendication 1, situé dans la section de turbine (28).

3. Moteur à turbine à gaz (20) selon la revendication 2 ou aube de turbine (64) selon la revendication 1, dans lequel la partie de pointe arquée (100) commence à 80 % de la portée du profil aérodynamique (78).
